# EUROPEAN PATENT APPLICATION

(11) **EP 0 920 796 A1**
(43) Date of publication of application: **09.06.1999**
(21) Application number: 98308497.1
(22) Date of filing: 16.10.1998
(51) Int. Cl.: A01C 7/20, A01C 5/06

(54) **Soil working implement**

(30) Priority: 06.11.1997 GB 9723428
(71) Applicant: KVERNELAND KLEPP AS, N-4344 Kvernaland (NO)
(72) Inventor: Langbakk, Hans Petter, 4300 Sandnes (NO)
(74) Representative: Orr, William McLean

(57) **Abstract**

A soil working implement (10) comprising a frame (12), a coupling arrangement on the frame for coupling the implement to a propelling vehicle, a number of rows of soil working tines (15, 16, 23, 24) mounted on the frame and extending transversely of the direction of travel with the tines (25) in each row projecting downwardly so that the lower tips can penetrate and move through the ground, first resilient means (36) acting on the tines (25) so as to apply a biasing force extending parallel to the ground and in the travelling direction, second resilient biasing means (40) acting on each row of tines (25) to apply a downwardly acting force on the tips (26), means (46a) for adjusting the second resilient biasing means (40) to vary the applied downwardly acting force, and a common actuator (49) coupled with the adjusting means (46a) and operable to carry out joint adjustment of the downwardly acting force applicable to the tips (26) of the tines (25) of all of the rows (23, 24).

## Description

This invention relates to a soil working implement which is intended to be moved over the ground by a tractor or other propelling vehicle, and which has downwardly extending tines having lower working tips which are movable through the ground to carry out required soil working operations.

Examples of soil working implement to which the invention may be applied include harrows and seed drilling implements, and including direct drilling implements.

In a seed drilling implement which is usually towed behind a tractor, and which is coupler therewith by a semi-mounted coupling arrangement, the frame of the implement has one or more rows of seed drills mounted thereon, and a typical drill assembly comprises a forward tine having a lower tine point to make preliminary opening of the ground, and closely followed by a seed distribution tube which has a lower opening which moves in the "drill" formed by the tip of the tine and which distributes seeds into the drill at a required rate.

One particularly preferred drill assembly currently in use comprises a forward tine closely coupled with a "wing point share", and which may have one (or two) distribution tube which distributes seed into the drilled ground.

It is important, as far as is possible, to maintain a substantially uniform depth of planting of the seed, so as to achieve uniform germination and growth, but many fields have undulations (humps and hollows) which may extend both in the direction of travel, and also transversely of this direction. This presents difficulties in maintaining uniform planting depth of seed, bearing in mind that the implement frame is usually rigid and supported by depth wheels, and the rows of drills extend across the frame generally perpendicular to the travelling direction.

Also, the degree of resistance of the ground to penetration by the tines and formation of the drills can vary from one part of a field to another. The presence of buried stones and clods can also have an adverse effect on seed drilling.

With a view to overcome, or at least mitigate these difficulties, it is usual to provide some form of resilient mounting of the upper ends of the drill assemblies. The tines are inherently capable of resilient deformation, and therefore this provides a spring storage effect which allows the tines to yield to a small extent, as necessary, as they move through the ground, but the resilient mounting at the upper ends of the tines permits further resilient yielding of the tine and seed drill assembly when required. The resilient force applied to the tine tip is substantially parallel to the ground and in the travelling direction, and this allows the tine tip to move as a consequence of variable ground resistance.

However, what is further important is that some form of biasing force be available (when necessary) to apply a downward action on the drill assembly, and one means of providing this additional biasing force is disclosed in more detail in our International publication No WO97/16061.

The present invention seeks to provide improved means, in a soil working implement, of applying a downward biasing action to the lower ends of the tines of the implement.

A soil working implement according to the invention is defined in claim 1.

Preferred aspects of the implement are set out in the dependent claims.

A preferred embodiment of soil working implement according to the invention will now be described in detail, and taking the form of a seed drilling implement, and in which:
Figure 1 is a perspective side and part rear illustration of a seed drilling implement mounted at the rear of a tractor, and to which the invention may be applied;
Figure 2 is a side view, showing in more detail a seed drilling module of the implement; and,
Figure 3 is a detail side view, to an enlarged scale, of part of a mechanism for applying a downward biasing action to the working tips of the tines / drills of the seed drilling module of the implement shown in Figure 2.

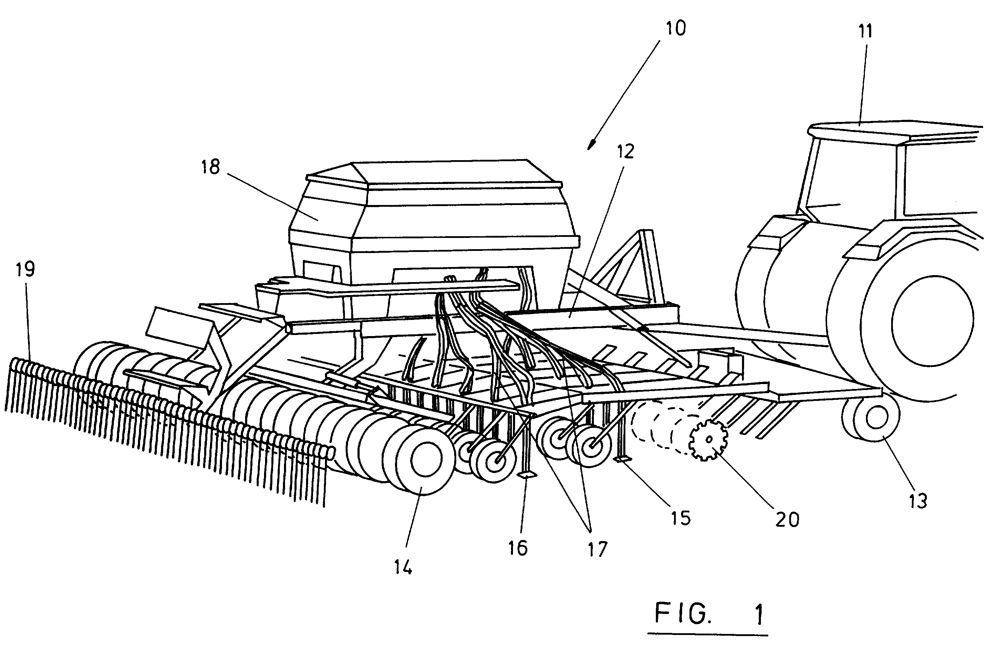

Referring first to Figure 1, this is a general view of a soil working implement to which the invention may be applied, and which takes the form of a seed drilling implement. The implement comprises a frame, a forward coupling arrangement on the frame for coupling the implement to the rear of a propelling vehicle, and one or more transversely extending rows of seed drills mounted on the frame.

Examples of seed drilling implement to which the invention may be applied, include the designs of implements disclosed in more detail in WO97/16061 and WO96/29852.

Referring first to Figure 1, this shows a seed drilling implement, designated generally by reference 10, mounted at the rear of a tractor 11, and having a general frame 12 supported at its forward end by a transversely extending row of wheels 13, and at its rear end by a transversely extending row of wheels 14. Two rows of seed drills 15 and 16 are mounted on the frame 12, and extend transversely of the general direction of forward movement, and seed is distributed to the drills 15 and 16 via distribution tubes 17 leading from a seed hopper 18.

A row of transversely extending finger tines 19 is arranged behind the rear row of wheels 14, and forwardly of the seed drills 15 and 16 there is an arrangement of cultivator tines and disc coulters, of which the coulters are shown by reference 20. Intermediate the row of disc coulters 20 and the forward row of ground wheels 13, a detachably mounted cultivator module is provided.

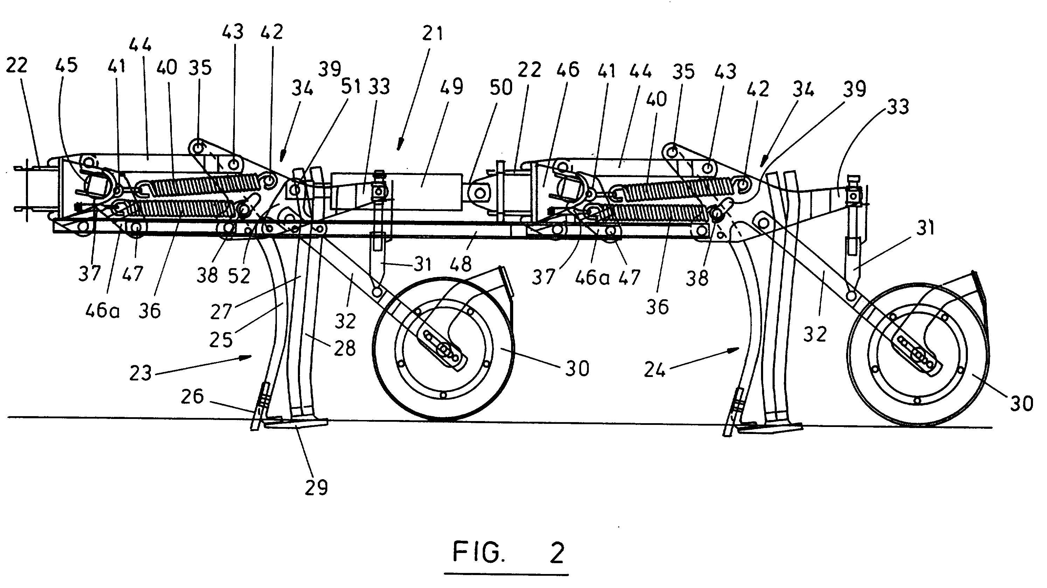

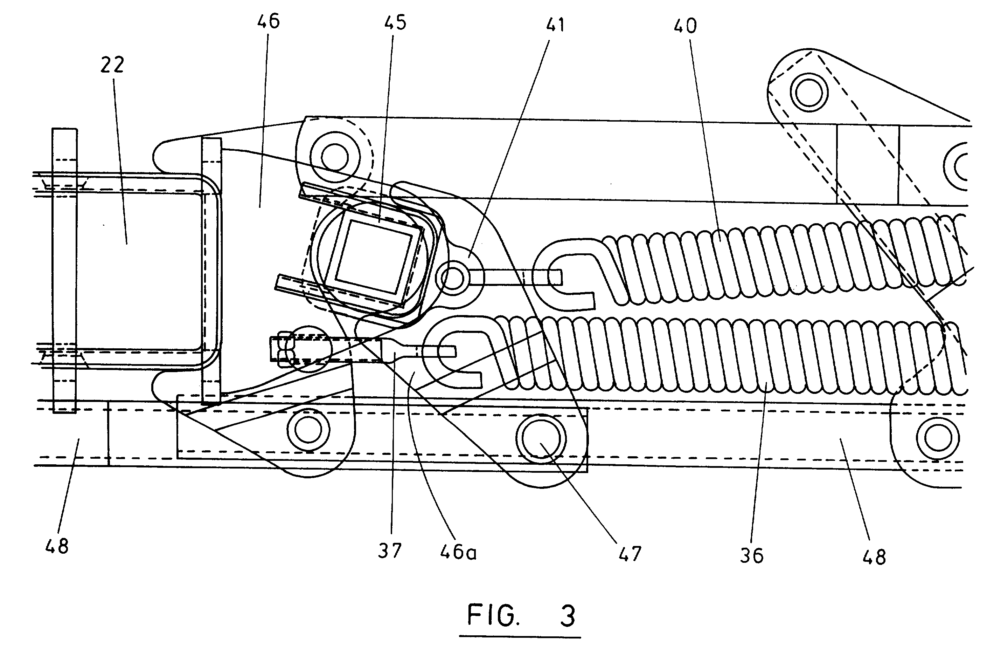

Referring now to Figures 2 and 3, these figures shown in more detail the construction of a seed drilling module, incorporated in the implement 10, by being mounted on the general frame 12. The module shown in Figures 2 and 3 effectively comprise the rows of seed drills 15 and 16 shown in Figure 1.

Referring now to Figures 2 and 3, the seed drilling module is designated generally by reference 21, and a part of the main frame (see frame 12 in Figure 1) to which the seed drilling module is attached is represented by transversely extending frame beams 22. A forward seed drilling assembly is shown by reference 23, and a rear seed drill assembly is shown by reference 24, and each assembly comprises a row of tines and related seed drilling components, which extends generally perpendicular to the travelling direction. As shown, each seed drill assembly comprises a leading tine 25 having a lower soil working tip or "point" 26, which penetrates the ground surface, and forms a drill, into which seed can be distributed by two distribution tubes 27 and 28, which supply seed to a wing point share 29. The point 26 and the share 29 open up the ground to form drills into which the seed can be distributed.

A respective depth control wheel 30 is mounted on the frame, and controls the working depth of the row of seed drills immediately in front of it, and any suitable means of adjustment in height may be provided, such as fluid cylinder 31, which reacts between a mounting arm 32, and one end 33 of a bell cap crank lever designated generally by reference 34.

Each tine 25 is pivotally mounted at its upper end on pivot 35, and is resiliently biased in a clockwise direction about pivot 35, so that the point 26 receives a biasing force extending generally parallel to the surface of the ground and in the travelling direction, whereby to provide resilient yielding of the point 26, when necessary, as it penetrates the ground and moves forwardly. The resilient means to apply this biasing action comprises a tension spring 36 which acts between an anchor point 37 on the frame, and a pin 38 carried by the tine 25 at a position below the top pivot 35, and which is movable in a slot 39. If the point 26 hits a major obstacle in the ground, the entire tine 25 can yield in a rearward direction, to minimise the impact, and this is permitted by movement of the pin 38 within slot 39. The tension springs 36 therefore comprise first biasing means, applying a forward biasing force to the lower ends of the tines 25 and related seed drilling components, such force extending generally parallel to the ground surface and in a forward direction. However, it is desirable to apply a second biasing action to the lower working ends of the seed drills, and this is provided by a second means of storage of resilient energy, which will now be described below.

A second biasing means comprises a further tension spring 40, which acts between a bracket 41 and a pin connection 42 on the bell crank lever 34. The tension spring 40 therefore applies a clockwise turning moment to the bell crank lever 34, about a pivot connection 43 of a trailing toggle linkage 44, so that a downwardly acting force is transmitted from the bracket 34 to the seed drill assemblies in each row.

Each bracket 41 is secured to a transversely extending elongate actuator element in the form of an actuator tube 45, of square cross section, and which is pivotable about its axis within enlarged mounting holes formed in mounting plates 46 attached to the frame, and angular adjustment of the actuator tube 45 about its axis can cause variation in the stored-up tensile force within the spring 40. Evidently, variation in the tension in spring 40 will cause corresponding variation in the downwardly acting force applied to the tips of the seed drill assemblies, and this facility to adjust the downward force is desirable to suit different seed drilling conditions.

Therefore, each row of seed drills (23, 24) has second biasing means in the form of springs 40 providing adjustable downwardly acting force, but in addition a common actuator system is provided, to operate the actuator tubes 45 simultaneously, so that joint adjustment of both rows of seed drills can take place simultaneously. Evidently, if more than two rows of seed drills are required, it will be a simple matter to provide joint adjustment of all three (or more) rows of seed drills if required.

Thus, each actuator tube 45 (which extends throughout the entire width of the machine so that all the tine mechanisms in one row can be adjusted by the same actuator tube) has its angular adjustment controlled by being mounted on one end of a control arm 46a. Actuator tube 45 is pivotable within the mounting holes in the mounting plates 46, but each control arm 46a is pivotably adjustable about the axis of actuator tube 45, by reason of its free end 47 being pivoted to a common actuating rod 48, slidably mounted on the frame of the implement. The slidable rod 48 is movable longitudinally, under the action of a common actuator which takes the form of a fluid operated cylinder 49. The cylinder 49 is fixedly mounted at its end 50 on the main frame, and its opposite end 51 is pivoted to an adjustment bracket 52, which also is pivoted to the sliding rod 48. Therefore, operation of the actuator cylinder 49, in one or the other direction, causes corresponding linear movement of the sliding rod 48, which in turn, via its connection with the control arms 46a, effects rotation of the actuator tubes 45 and corresponding angular adjustment of the brackets 41 so as to increase or decrease the stored-up tension within the springs 40 accordingly.

The disclosed embodiment therefore provides a simple means of jointly adjusting the downwardly acting force on the seed drill assemblies of each row, under the operation of a common actuator. Although fluid cylinder 49 is shown, evidently other power sources may be provided to effect necessary linear reciprocation of the sliding rod 48, in order to adjust the tension in the springs 40.

Although not described in detail above, the preferred embodiment shown in Figure 1 has more than one separate section, namely a central section and two outwardly extending "wing sections" which are foldable upwards to transport positions of reduced overall width of the apparatus, but which can be downwardly pivoted to the operating positions as shown. Each section may therefore have its own seed distribution module having at least two rows of tines (and which are adjustable jointly as referred to above). However, with a multiple section apparatus, a single power source e.g. a single fluid cylinder may operate the adjustment of the rows of tines of all of the sections, by having one master cylinder for the main or central section, and a respective slave cylinder for each of the outer frame sections. Alternatively, a single master cylinder may be provided, and which is coupled with respective slave cylinders for each of the main section, and the outer sections.

## Claims

1. A soil working implement (10) which is intended to be coupled with a propelling vehicle and which comprises:
a frame (12);
a coupling arrangement on the frame for coupling the implement to the propelling vehicle;
a number of rows of soil working tines (15,16,23,24) mounted on the frame, with each row extending transversely of the direction of travel, and the tines (25) in each row projecting downwardly so that the lower tips of the tines can penetrate and move through the ground;
first resilient means (36) acting on the tines (25) so as to apply to the tips (26) of the tines a biasing force which extends generally parallel to the ground surface and in the travelling direction;
second resilient biasing means (40) acting on each row of tines (25) so as to apply a downwardly acting force on the tips (26) of the tines of the row;
means (46a) for adjusting the second resilient biasing means (40) to vary the applied downwardly acting force; and,
a common actuator (49) coupled with said adjusting means (46a) and operable to carry out joint adjustment of the downwardly acting force applicable to the tips (26) of the tines (25) of all of the rows (23,24).

2. An implement according to claim 1, in which each second resilient biasing means comprises a tension spring (40).

3. An implement according to claim 2, in which the actuator (49) is operable to increase or decrease the tension in each of said tension springs (40) via pivotable adjustment of an elongate actuator element about its axis.

4. An implement according to claim 3, in which the elongate actuator elements (45) of each row (23,24) are connected to a common longitudinally adjustable slide (48).

5. An implement according to any one of the preceding claims, in which the first biasing means comprises tension springs (36).

6. An implement according to any one of the preceding claims, in which the tines (25) in each row form part of respective seed drill assemblies.

7. An implement according to claim 6, in which each seed drill assembly includes a respective wing point share (29).

8. An implement according to any one of the preceding claims, in which the frame (12) comprises a main section, and at least one side frame section which is foldable upwardly to a transport position, and downwardly to an operating position, and in which a single power source is provided to effect adjustment of the rows of tines of all of said sections.

9. An implement according to claim 8, in which the single power source comprises a master cylinder, and which is coupled with a respective slave cylinder associated with each separate section.
